# EUROPEAN PATENT APPLICATION

(11) **EP 4 778 703 A1**
(43) Date of publication of application: **22.07.2026**
(21) Application number: 24865008.7
(22) Date of filing: 30.05.2024
(51) Int. Cl.: B29C 64/393, B29C 64/153, B29C 64/268, B33Y 30/00, B33Y 50/02

(54) **THREE-DIMENSIONAL FABRICATION DEVICE**

(30) Priority: 13.09.2023 JP 2023148335
(71) Applicant: SCREEN Holdings Co., Ltd., Kyoto-shi, Kyoto 602-8585 (JP)
(72) Inventor: HISHITANI, Daisuke, Kyoto-shi, Kyoto 602-8585 (JP)
(74) Representative: Goddar, Heinz J.
(86) International application number: PCT/JP2024/019903
(87) International publication number: WO 2025/057500

(57) **Abstract**

A three-dimensional modeling apparatus (1) includes a material holding part (3), an optical head (2), and a control part (5). A control of the control part (5) is switchable between a first writing mode and a second writing mode. In the first writing mode, scanning of a light beam is performed only once at each position in a writing area on which writing is instructed by design data on a writing target layer. In the second writing mode, scanning of the light beam is performed a plurality of times at each position in the writing area in a state where the quantity of light applied to each position in the writing area in one scanning of the light beam is smaller than that in the first writing mode. It is thereby possible to form a modeled object with high accuracy.

## Description

### TECHNICAL FIELD

The present invention relates to a three-dimensional modeling apparatus.

### [CROSS REFERENCE TO RELATED APPLICATION]

The present application claims the benefit of priority to Japanese Patent Application No. 2023-148335 filed on September 13, 2023, the content of which is incorporated herein by reference in its entirety.

### BACKGROUND ART

In recent years, an SLS (Selective Laser Sintering) type three-dimensional modeling apparatus has been used, which emits a modulated laser beam to a modeling material such as resin powder, metal powder, or the like to fuse the modeling material and then solidifies the modeling material, to thereby perform three-dimensional modeling.

In a powder bed type three-dimensional modeling apparatus, for example, resin powder is spread all over a construction platform thinly in a layered form and a laser beam is scanned on a layer of the resin powder by a galvanometer mirror or the like, to thereby fuse the resin powder in an irradiation area of the laser beam. Then, by repeating this operation, the fused resin powder is layered and solidified, to thereby form a modeled object. In the powder bed type three-dimensional modeling apparatus, generally, the resin powder on the construction platform is heated to a predetermined preheating temperature lower than a melting point of the resin powder by several °C to ten several °C and the laser beam is emitted to the resin powder whose temperature is kept at the preheating temperature (National Publication of Translation No. 2021-509094 (Document 1)).

In the layer of the resin powder on the construction platform, a temperature of the irradiation area of the laser beam (i.e., writing area) increases and thermal diffusion is caused toward a non-writing area around the writing area. Further, since the light quantity of the laser beam is gradually changed in the vicinity of a boundary between the writing area and the non-writing area, the quantity of light at an end portion of the non-writing area is not zero. For this reason, in a narrow non-writing area or the like sandwiched between two writing areas, due to the thermal diffusion from the writing areas and the influence of the end-portion light quantities of the writing areas, there arises a possibility that fusion of the resin powder contrary to the intention may occur, to thereby reduce the dimensional accuracy of the modeled object.

Further, in a case where new resin powder is supplied onto the layer of the resin powder (hereinafter, also referred to as an "already-written layer") on which a pattern is written on the construction platform, in the layer of the new resin powder, a temperature immediately above a writing area and an area therearound in the already-written layer sometimes becomes higher than the predetermined preheating temperature. Therefore, in a case where the laser beam is emitted immediately above the writing area in the layer of the new resin powder, there is a possibility that fusion of the resin powder contrary to the intention may be caused in the surroundings of the irradiation area of the laser beam. As described above, particularly, in the narrow non-writing area sandwiched between the two writing areas, the possibility that fusion of the resin powder contrary to the intention may occur increases.

### SUMMARY OF THE INVENTION

It is an object of the present invention to form a modeled object with high accuracy.

A first aspect of the present invention is intended for a three-dimensional modeling apparatus, and the three-dimensional modeling apparatus includes a material holding part having a stage for holding a powdery modeling material and a material supply part for supplying the modeling material onto the stage, an optical head for scanning a light beam on the modeling material held on the stage while modulating the light beam, and a control part for controlling the material holding part and the optical head on the basis of design data of a modeled object to supply the modeling material onto the stage and scan the light beam on a writing target layer which is a surface layer of the supplied modeling material, to thereby fuse the modeling material in an area on which light is emitted and repeat writing of a pattern. In the three-dimensional modeling apparatus according to the first aspect of the present invention, a control by the control part is switchable between a first writing mode in which scanning of the light beam is performed only once at each position in a writing area on which writing is instructed by the design data on the writing target layer and a second writing mode in which scanning of the light beam is performed a plurality of times at each position in the writing area in a state where a quantity of light applied to each position in the writing area in one scanning of the light beam is smaller than that in the first writing mode.

According to the present invention, it is possible to form a modeled object with high accuracy.

A second aspect of the present invention is intended for the three-dimensional modeling apparatus of the first aspect, and in the three-dimensional modeling apparatus according to the second aspect of the present invention, the second writing mode is selected by the control part in a case where a non-writing area on which writing is not instructed by the design data includes a narrow non-writing area having a width not larger than a predetermined threshold value.

A third aspect of the present invention is intended for the three-dimensional modeling apparatus of the first or second aspect, and in the three-dimensional modeling apparatus according to the third aspect of the present invention, a light intensity of the light beam in the second writing mode is the same as that of the light beam in the first writing mode. A scanning speed of the light beam in the second writing mode is higher than that of the light beam in the first writing mode.

A fourth aspect of the present invention is intended for the three-dimensional modeling apparatus of the third aspect, and in the three-dimensional modeling apparatus according to the fourth aspect of the present invention, a number of scans of the light beam at each position in the writing area in the second writing mode is two times. The scanning speed of the light beam in the second writing mode is twice the scanning speed of the light beam in the first writing mode.

A fifth aspect of the present invention is intended for the three-dimensional modeling apparatus of the first or second aspect, and in the three-dimensional modeling apparatus according to the fifth aspect of the present invention, a scanning speed of the light beam in the second writing mode is the same as that of the light beam in the first writing mode. A light intensity of the light beam in the second writing mode is lower than that of the light beam in the first writing mode.

A sixth aspect of the present invention is intended for the three-dimensional modeling apparatus of the first or second aspect (or any one of the first to fifth aspects), and in the three-dimensional modeling apparatus according to the sixth aspect of the present invention, a number of scans of the light beam at each position in the writing area in the second writing mode is two times. The quantity of light applied to each position in the writing area in a first scanning of the light beam in the second writing mode is the same as that applied to each position in the writing area in a second scanning of the light beam in the second writing mode.

A seventh aspect of the present invention is intended for the three-dimensional modeling apparatus of the first or second aspect (or any one of the first to fifth aspects), and in the three-dimensional modeling apparatus according to the seventh aspect of the present invention, a number of scans of the light beam at each position in the writing area in the second writing mode is two times. The quantity of light applied to each position in the writing area in a first scanning of the light beam in the second writing mode is larger than that applied to each position in the writing area in a second scanning of the light beam in the second writing mode.

An eighth aspect of the present invention is intended for the three-dimensional modeling apparatus of the first or second aspect (or any one of the first to seventh aspects), and in the three-dimensional modeling apparatus according to the eighth aspect of the present invention, the light beam is a multi-spot beam consisting of a plurality of light spots which are linearly arranged in a predetermined arrangement direction. The multi-spot beam is scanned in a predetermined scan direction inclined with respect to the arrangement direction.

A ninth aspect of the present invention is intended for the three-dimensional modeling apparatus of the first or second aspect (or any one of the first to eighth aspects), and the three-dimensional modeling apparatus according to the ninth aspect of the present invention further includes a temperature measurement part for measuring a temperature distribution on an upper surface of the modeling material on the stage. In the three-dimensional modeling apparatus according to the ninth aspect of the present invention, the control part adjusts a light intensity or a scanning speed of the light beam in the second writing mode on the basis of the temperature distribution measured by the temperature measurement part.

A tenth aspect of the present invention is intended for the three-dimensional modeling apparatus of the first or second aspect (or any one of the first to ninth aspects), and in the three-dimensional modeling apparatus according to the tenth aspect of the present invention, the modeling material is a resin material.

These and other objects, features, aspects and advantages of the present invention will become more apparent from the following detailed description of the present invention when taken in conjunction with the accompanying drawings.

### BRIEF DESCRIPTION OF DRAWINGS

FIG. 1 is a view showing a configuration of a three-dimensional modeling apparatus in accordance with one preferred embodiment;
FIG. 2 is a view showing a configuration of a control part;
FIG. 3 is a block diagram showing functions of the control part;
FIG. 4 is a flowchart showing an operation flow for forming a modeled object;
FIG. 5 is a perspective view of the modeled object;
FIG. 6 is a transverse sectional view of the modeled object;
FIG. 7 is a transverse sectional view of the modeled object;
FIG. 8 is a view showing a light quantity profile and the like in writing a pattern in a first writing mode;
FIG. 9 is a flowchart showing an operation flow for forming the modeled object;
FIG. 10 is a view showing a light quantity profile and the like in writing a pattern in a second writing mode; and
FIG. 11 is a view showing the light quantity profile and the like in writing a pattern in the second writing mode.

### DESCRIPTION OF EMBODIMENTS

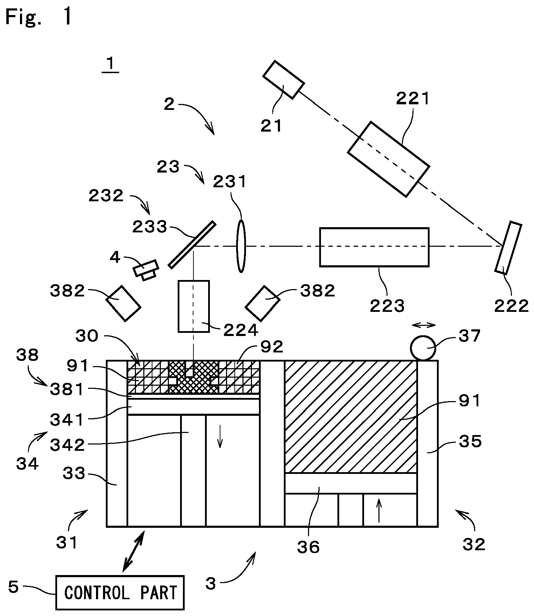

FIG. 1 is a view showing a configuration of a three-dimensional modeling apparatus 1 in accordance with one preferred embodiment of the present invention. The three-dimensional modeling apparatus 1 exemplarily shown in FIG. 1 is an SLS (Selective Laser Sintering) type three-dimensional modeling apparatus which emits a modulated laser beam onto a powdery modeling material to fuse the modeling material and then solidifies the modeling material, to thereby perform three-dimensional modeling.

The above-described modeling material is, for example, a resin, a metal, engineering plastics, ceramics, or the like. The above-described modeling material may contain a plurality of types of materials. In the present preferred embodiment, the modeling material is a powdery resin material. The resin material is a modeling material whose main material is a resin, and may contain a material other than the resin. The material other than the resin is, for example, a material (carbon particles or the like) having a relatively high absorptivity with respect to the wavelength of the above-described laser beam.

The three-dimensional modeling apparatus 1 includes an optical head 2, a material holding part 3, a temperature measurement part 4, and a control part 5. The material holding part 3 is disposed below the optical head 2 and holds a powdery modeling material 91. FIG. 1 shows the material holding part 3 in a longitudinal section and the modeling material 91 is hatched. The optical head 2 scans a laser beam (i.e., a light beam) on the modeling material 91 held by the material holding part 3 while modulating the laser beam. The light emitted from the optical head 2 to the modeling material 91 is, for example, a multi-spot beam (i.e., multi-spot line beam) consisting of a plurality of light spots which are linearly arranged in a predetermined arrangement direction. The temperature measurement part 4 measures a temperature of the modeling material 91 held by the material holding part 3. The control part 5 controls the optical head 2, the material holding part 3, and the temperature measurement part 4.

The material holding part 3 includes a modeling part 31 and a material supply part 32. The modeling part 31 includes a first cylinder 33 and a first piston 34. The first cylinder 33 is a tubular member extending in an up-and-down direction. The plan-view shape of an internal space of the first cylinder 33 is, for example, a substantially rectangular shape. The first piston 34 is a member to be accommodated in the internal space of the first cylinder 33. The first piston 34 is movable in the up-and-down direction inside the internal space of the first cylinder 33. The first piston 34 includes a substantially flat plate-like stage 341 substantially perpendicular to the up-and-down direction and a column 342 supporting the stage 341 from below. The plan-view shape of the stage 341 is substantially the same as that of the internal space of the first cylinder 33.

In the modeling part 31, a three-dimensional space surrounded by an inner surface of the first cylinder 33 and an upper surface of the stage 341 serves as a modeling space 30 in which the three-dimensional modeling is performed. In the modeling space 30, the powdery modeling material 91 is held on the stage 341. In other words, the three-dimensional modeling apparatus 1 is a powder bed type three-dimensional modeling apparatus.

The modeling part 31 includes a heater 38 for heating the modeling material 91 on the stage 341. The heater 38 gives energy substantially uniformly to the modeling material 91 on the stage 341, to thereby increase the temperature of the modeling material 91 up to a temperature lower than a melting point thereof and keep the temperature. In the exemplary case shown in FIG. 1, the heater 38 includes a first heater 381 and a second heaters 382. The first heater 381 is a substantially flat plate-like electric heater provided on an upper part of the stage 341. The first heater 381 is, for example, incorporated in the stage 341 and provided over a substantially entire surface of the stage 341 in a plan view. The second heaters 382 are halogen lamps which are disposed above the stage 341 away therefrom and emit light toward the stage 341. The configuration, arrangement, and the like of the heater 38 are not limited to the above but may be changed in various ways.

The material supply part 32 includes a second cylinder 35, a second piston 36, and a squeegee 37. The second cylinder 35 is a tubular member extending in the up-and-down direction and disposed adjacent to the side of the first cylinder 33. The plan-view shape of an internal space of the second cylinder 35 is, for example, a substantially rectangular shape. The second piston 36 is a member to be accommodated in the internal space of the second cylinder 35. The second piston 36 is movable in the up-and-down direction inside the internal space of the second cylinder 35. The plan-view shape of the second piston 36 is substantially the same as that of the internal space of the second cylinder 35.

In the material supply part 32, a three-dimensional space surrounded by an inner surface of the second cylinder 35 and an upper surface of the second piston 36 serves as a storage (pooling) space for storing the modeling material 91 to be supplied to the modeling part 31. The squeegee 37 is a rodlike (e.g., substantially columnar) or plate-like member extending in a horizontal direction across an upper opening of the second cylinder 35. The squeegee 37 is movable in the horizontal direction along an upper end surface of the second cylinder 35.

In the material holding part 3, when the modeling material 91 is supplied onto the stage 341, the first piston 34 of the modeling part 31 goes down by a predetermined distance. An upper surface of the modeling material 91 on the stage 341 thereby becomes positioned lower than an upper end surface of the first cylinder 33. On the other hand, in the material supply part 32, the second piston 36 goes up by a predetermined distance, and the modeling material 91 inside the second cylinder 35 is thereby lifted upward. Then, the squeegee 37 moves from on the second cylinder 35 to on the first cylinder 33, to thereby supply the modeling material 91 protruded upward from the upper end surface of the second cylinder 35 into the modeling space 30 of the modeling part 31. The upper surface of the modeling material 91 held inside the modeling space 30 is positioned at the substantially the same height as that of the upper end surface of the first cylinder 33.

The optical head 2 includes a laser light source 21, an illumination optical system 221, an optical modulator 222, a first projection optical system 223, a scanning part 23, and a second projection optical system 224. The laser light source 21 emits a laser beam. The laser light source 21 is, for example, a fiber laser light source. Further, the type of the laser light source 21 may be changed in various ways. Furthermore, the wavelength of the laser beam emitted from the laser light source 21 is set as appropriate in accordance with the type or the like of the modeling material 91.

The illumination optical system 221, the optical modulator 222, and the first projection optical system 223 modulate the laser beam emitted from the laser light source 21 into a modulated beam and guide the modulated beam to the scanning part 23. The second projection optical system 224 guides a multi-spot beam from the scanning part 23 to the modeling material 91 on the stage 341. The illumination optical system 221, the first projection optical system 223, and the second projection optical system 224 each include a plurality of optical elements such as lenses or the like.

The illumination optical system 221 shapes, for example, the laser beam from the laser light source 21 into a shaped beam having a substantially rectangular shape which is long in one direction (hereinafter, referred to as a "long axis direction") and guides the shaped beam to the optical modulator 222. In other words, the cross-sectional shape of the shaped beam is a substantially rectangular shape which is long in the long axis direction and short in a short axis direction perpendicular to the long axis direction. The long axis direction and the short axis direction are directions perpendicular to a traveling direction (i.e., an optical axis direction) of the shaped beam. Further, the cross-sectional shape of the shaped beam is a shape of the shaped beam on a plane perpendicular to the traveling direction of the shaped beam. The cross-sectional shape of the shaped beam can be regarded as a substantially straight linear shape extending in the long axis direction.

The optical modulator 222 modulates the shaped beam from the illumination optical system 221 into the modulated beam and guides the modulated beam to the first projection optical system 223. As the optical modulator 222, for example, an LPLV (Liner Planar Light Valve) which is one type of a PLV (Planar Light Valve) is used. The above-described modulated beam is a multi-spot beam consisting of a plurality of light spots arranged linearly in the long axis direction. In each light spot of the multi-spot beam, adjustment of gradation (i.e., adjustment of light intensity of outgoing light) is possible.

Further, the optical modulator 222 does not necessarily need to be the LPLV but may have any other configuration. The light emitted from the optical head 2 to the modeling material 91 is not limited to the above-described multi-spot line beam but may be changed in various ways. For example, a light beam consisting of a single light spot may be emitted from the optical head 2 to the modeling material 91.

The scanning part 23 reflects the modulated beam (i.e., the multi-spot beam) from the first projection optical system 223 and scans the modulated beam on the modeling material 91 inside the modeling space 30 of the material holding part 3 through the second projection optical system 224. The scanning part 23 includes, for example, a relay lens 231 and a galvano scanner 232. The galvano scanner 232 is a scanning mechanism including a galvanometer mirror 233 and a galvano motor (not shown). In the scanning part 23, the galvanometer mirror 233 is rotated by the galvano motor, to thereby change the traveling direction of the multi-spot beam reflected by the galvanometer mirror 233. As a result, the multi-spot beam emitted onto the modeling material 91 is scanned in a scan direction inclined with respect to the long axis direction (i.e., an arrangement direction of the plurality of light spots) of the multi-spot beam. The scan direction is, for example, a direction perpendicular to the long axis direction on the upper surface of the modeling material 91.

In the exemplary case shown in FIG. 1, a left-and-right direction of this figure is the above-described scan direction parallel to the stage 341. Further, a direction perpendicular to the paper of FIG.1 is a width direction perpendicular to the scan direction and parallel to the stage 341 (i.e., the arrangement direction of the plurality of light spots in the multi-spot beam). Further, the scanning part 23 does not necessarily need to include the galvano scanner but may have any other configuration.

The temperature measurement part 4 measures a temperature distribution on the upper surface of the modeling material 91 on the stage 341. The temperature measurement part 4 is, for example, an infrared thermography camera which is capable of picking up an image of the substantially entire upper surface of the modeling material 91 on the stage 341. A measurement result (e.g., picked-up image) obtained by the temperature measurement part 4 is sent to the control part 5.

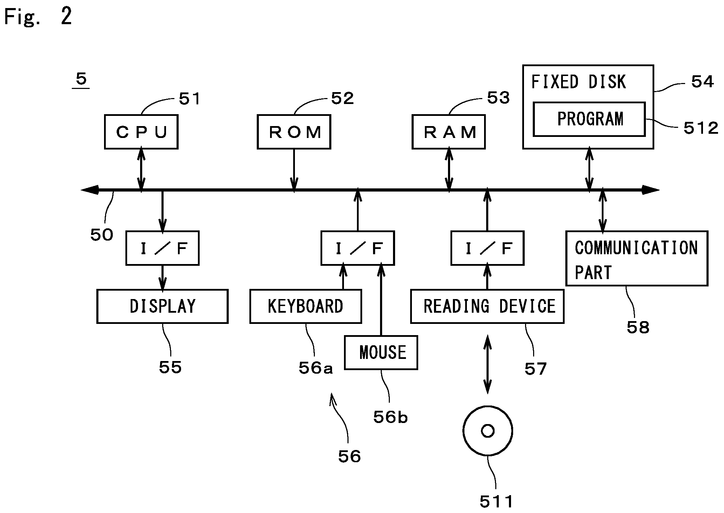

FIG. 2 is a view showing a configuration of the control part 5. The control part 5 has a configuration of a general computer system including a CPU 51, a ROM 52, a RAM 53, a fixed disk 54, a display 55, an input part 56, a reading device 57, a communication part 58, and a bus 50. The CPU 51 performs various arithmetic operations. The ROM 52 stores therein a basic program. The RAM 53 stores therein various information. The fixed disk 54 stores therein information. The display 55 is a display part which displays thereon various information such as an image or the like. The input part 56 includes a keyboard 56a and a mouse 56b for receiving an input from an operator.

The reading device 57 reads information from a non-transitory computer-readable recording medium 511 such as an optical disk, a magnetic disk, a magneto-optic disk, a memory card, or the like. The display 55, the keyboard 56a, the mouse 56b, and the reading device 57 are connected to the bus 50 through an interface I/F. The communication part 58 transmits and receives a signal to/from the constituent components other than the control part 5 in the three-dimensional modeling apparatus 1, an external device, and the like. The bus 50 is a signal circuit for connecting the CPU 51, the ROM 52, the RAM 53, the fixed disk 54, the display 55, the input part 56, the reading device 57, and the communication part 58 to one another.

In the control part 5, a program 512 is read out from the recording medium 511 through the reading device 57 in advance and stored into the fixed disk 54. The program 512 may be stored into the fixed disk 54 via a network. The CPU 51 serves as an arithmetic operation part which performs an arithmetic operation while using the RAM 53 and the fixed disk 54 in accordance with the program 512. Any constituent component other than the CPU 51 may be adopted to serve as the arithmetic operation part.

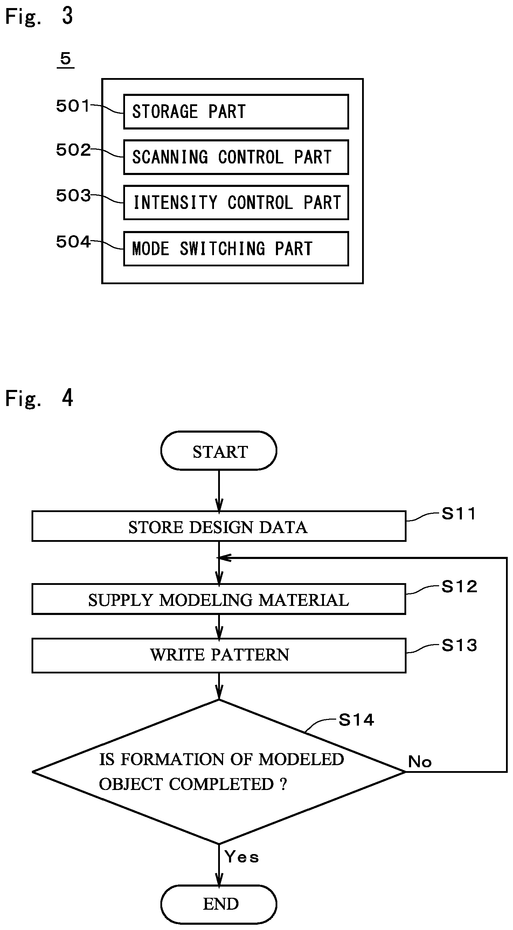

FIG. 3 is a block diagram showing a functional configuration (functional components) implemented when the control part 5 executes an arithmetic operation or the like in accordance with the program 512. These functional components include a storage part 501, a scanning control part 502, an intensity control part 503, and a mode switching part 504. All of or part of these functions may be implemented by a dedicated electric circuit. Further, these functions may be implemented by a plurality of computers. Among the functional components shown in FIG. 3, the scanning control part 502, the intensity control part 503, and the mode switching part 504 are implemented by the CPU 51, the ROM 52, the RAM 53, the fixed disk 54, and peripheral components thereof. Further, the storage part 501 is implemented mainly by the RAM 53 and the fixed disk 54.

The storage part 501 stores therein various information such as design data or the like of the three-dimensional modeled object formed by the three-dimensional modeling apparatus 1. The scanning control part 502 controls the galvano scanner 232 or the like of the scanning part 23 to adjust a scanning speed of the multi-spot beam on the modeling material 91. The intensity control part 503 controls the laser light source 21 or the like to adjust a light intensity of the multi-spot beam to be emitted onto the modeling material 91. The light intensity means light energy emitted onto the modeling material 91 per unit time and unit area. The mode switching part 504 switches a writing mode of the three-dimensional modeling apparatus 1.

Next, with reference to FIG. 4, an exemplary operation flow for forming a modeled object in the three-dimensional modeling apparatus 1 will be described. In the three-dimensional modeling apparatus 1, first, the design data of a three-dimensional modeled object to be formed are stored into the storage part 501 of the control part 5 (Step S11). The design data are a set of data (hereinafter, also referred to as "cross-sectional data") representing a transverse cross section obtained by slicing the modeled object into a predetermined thickness in the up-and-down direction. The cross-sectional data are data representing a shape of a portion corresponding to one layer in a case where the modeled object is divided into a plurality of layers laminated in the up-and-down direction. Further, in the control part 5, a predetermined correction may be performed on the design data.

Next, the control part 5 controls the material holding part 3 to supply the powdery modeling material 91 onto the stage 341 (Step S12). The modeling material 91 on the stage 341 is preheated by the heater 38 and the temperature of the modeling material 91 increases, to be kept at a temperature lower than the melting point of the modeling material 91 and higher than a crystal point thereof (i.e., crystallization temperature). In a case where resin powder having a melting point of 185 °C and a crystal point of 150 °C is used as the modeling material 91, for example, the temperature of the modeling material 91 on the stage 341 is kept at a temperature higher than 150 °C and lower than 185 °C (e.g., about 173 °C). The modeling material 91 on the stage 341 can be thereby kept in a state of powder without being fused. Further, the modeling material 91 fused on the stage 341 is kept in a fused state without being solidified.

Then, the control part 5 controls the optical head 2 to scan the above-described multi-spot beam on a surface layer (hereinafter, also referred to as a "writing target layer 92") of the modeling material 91 supplied onto the stage 341 in the above-described scan direction while modulating the multi-spot beam by using the above-described design data (i.e., the writing data). The temperature of the modeling material 91 in an area of the writing target layer 92, to which light is emitted, thereby increases to become a modeling temperature (e.g., about 220 °C) not lower than the melting point, and the modeling material 91 in this area is fused, to thereby write a pattern (i.e., a pattern formed of the fused modeling material 91) on the writing target layer 92 (Step S13).

Writing of the pattern in Step S13 is performed, for example, by multipath writing in which scanning of the multi-spot beam in the scan direction and step movement in the width direction (i.e., subscan direction) are repeated, to thereby complete the writing on the entire writing target layer 92. Further, the writing of the pattern may be performed by single-pass writing in which the multi-spot beam is scanned in the scan direction only once, to thereby complete he writing on the entire writing target layer 92.

In the writing target layer 92, heat is diffused from the modeling material 91 fused in the area to which the light is emitted, to the modeling material 91 around this area. The temperature of the modeling material 91 in the area to which the light is emitted thereby decreases, and the modeling material 91 in this area is kept in the fused state since the temperature of the modeling material 91 in the writing target layer 92 is kept higher than the above-described crystal point by the heater 38.

When the writing of the pattern on the writing target layer 92 is completed, it is checked whether formation of the modeled object is completed or not (Step S14). When the formation of the modeled object is not completed, the process goes back to Step S12, and a new modeling material 91 is supplied onto the layer of the modeling material 91 on which the pattern is written on the stage 341, to thereby form a new writing target layer 92 (Step S12). Then, the multi-spot beam is scanned on the new writing target layer 92 and a pattern formed of the fused modeling material 91 is written (Step S13).

As described above, in the pattern written in Step S13, the modeling material 91 is kept in the fused state, and also in the pattern written in the last Step S13, the modeling material 91 is kept in the fused state. Thus, in the three-dimensional modeling apparatus 1, since the modeling material 91 in the fused state is layered, a modeled object having high binding power in a layer direction (i.e., the up-and-down direction) is formed when the modeling material 91 is solidified.

In the three-dimensional modeling apparatus 1, Steps S12 to S13 are repeated until formation of the modeled object is completed. While Steps S12 to S13 are repeated, the heater 38 continues to heat the modeling material 91, and when the repeat of Steps S12 to S13 is ended, the heating of the modeling material 91 by the heater 38 is also finished. The temperature of the modeling material 91 kept in the fused state in the above-described pattern thereby decreases to a temperature not higher than the crystal point and the modeling material 91 is solidified, and a three-dimensional modeled object of the solidified modeling material 91 is formed.

Next, switching of the writing mode in the three-dimensional modeling apparatus 1 will be described. In the three-dimensional modeling apparatus 1, the writing mode in pattern writing (i.e., scanning) performed in above-described Step S13 can be switched between a first writing mode and a second writing mode by the mode switching part 504 of the control part 5. The first writing mode is a so-called normal writing mode and the writing operation of the three-dimensional modeling apparatus 1 in Step S13 can be thereby simplified as compared with in the second writing mode. On the other hand, the second writing mode is a so-called high-precision writing mode. In the second writing mode, as compared with in the first writing mode, the writing operation of the three-dimensional modeling apparatus 1 is complicated but the accuracy of the modeled object to be formed can be improved. In the following description, first, the first writing mode will be described and then the second writing mode will be described.

In writing of a pattern in the first writing mode, as described above, the multi-spot beam emitted onto the modeling material 91 with a predetermined light intensity (hereinafter, also referred to as a "first light intensity") is scanned on the modeling material 91 at a predetermined scanning speed (hereinafter, also referred to as a "first scanning speed"). At that time, on the upper surface of the modeling material 91, the pattern writing is completed when an irradiation area of the multi-spot beam passes through on each position of the upper surface only once. In other words, the light from the optical head 2 is not emitted again on the area of the writing target layer 92 of the modeling material 91, which is fused by emitting light.

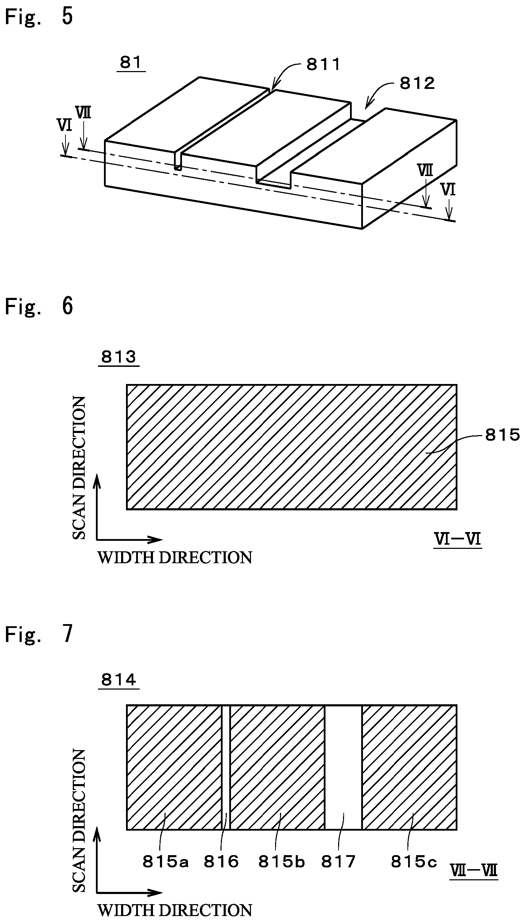

FIG. 5 is a perspective view showing a modeled object 81 to be modeled by the three-dimensional modeling apparatus 1. The modeled object 81 has a substantially rectangular parallelepiped shape, and a first groove 811 and a second groove 812 are provided in an upper surface of the modeled object 81. The first groove 811 and the second groove 812 are each a substantially straight linear groove extending in parallel to the above-described scan direction and provided over the entire length in the scan direction of the modeled object 81. The first groove 811 and the second groove 812 have the same depth which is smaller than the height of the modeled object 81. The size of the first groove 811 in the width direction is smaller than that of the second groove 812 in the width direction.

FIG. 6 is a view showing a transverse cross section 813 of the modeled object 81 at a position of VI-VI in FIG. 5. FIG. 7 is a view showing a transverse cross section 814 of the modeled object 81 at a position of VII-VII in FIG. 5. Respective cross-sectional data corresponding to the transverse cross sections 813 and 814 are included in the above-described design data. In the transverse cross section 813, an entire rectangular area corresponding to the modeled object 81 is a writing area 815 on which writing is instructed by the design data. In FIG. 6, the writing area 815 is hatched.

In the transverse cross section 814, among the rectangular area immediately above the writing area 815 in the transverse cross section 813, respective rectangular strip-like areas corresponding to the first groove 811 and the second groove 812 are non-writing areas 816 and 817 on which writing is not instructed by the design data. Further, a rectangular area on the left side of the non-writing area 816, a rectangular area between the non-writing area 816 and the non-writing area 817, and a rectangular area on the right side of the non-writing area 817 are writing areas 815a, 815b, and 815c, respectively, on which writing is instructed by the design data. In FIG. 7, the writing areas 815a, 815b, and 815c are hatched.

In the exemplary case shown in FIG. 7, the size of the non-writing area 816 corresponding to the first groove 811 in the width direction (i.e., the left-and-right direction in this figure) is not larger than a predetermined threshold value (hereinafter, also referred to as a "narrow threshold value"). Further, the size of the non-writing area 817 corresponding to the second groove 812 in the width direction is larger than this narrow threshold value. In the following description, the non-writing area 816 will be also referred to as a "narrow non-writing area 816". In other words, in the exemplary case shown in FIG. 7, the non-writing areas 816 and 817 include the narrow non-writing area 816.

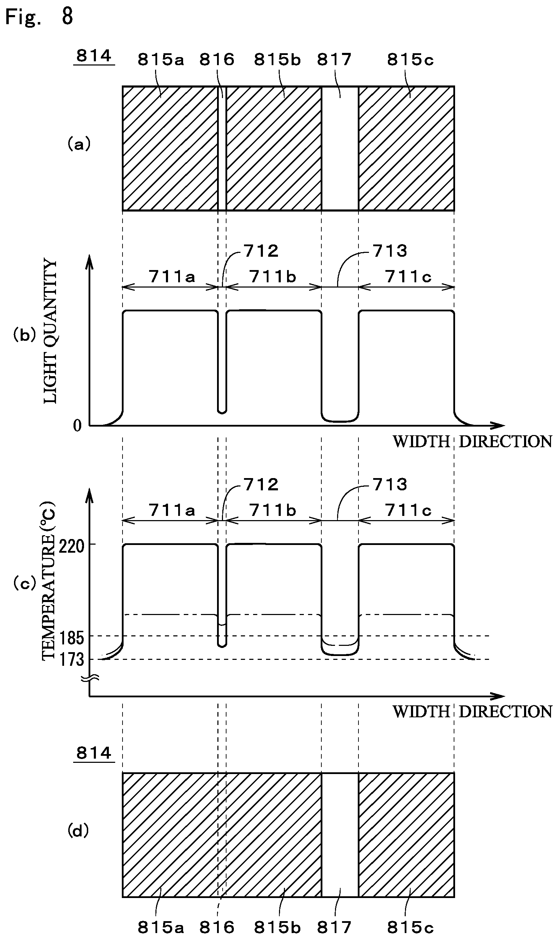

FIG. 8 is a view showing a light quantity profile and the like in writing a pattern corresponding to the transverse cross section 814 in the first writing mode. A view with reference sign (a) in FIG. 8 (hereinafter, also referred to as "FIG. 8(a)" is a view showing a pattern (i.e., design pattern) on the design data in the transverse cross section 814. FIG. 8(b) is a graph showing the light quantity profile of the multi-spot beam to be emitted onto the writing target layer 92. The horizontal axis in FIG. 8(b) represents the width direction and the vertical axis thereof represents the light quantity. The light quantity refers to the total quantity of light energy emitted onto one position on the modeling material 91 in one scanning of the optical head 2.

FIG. 8(c) is a view showing a temperature distribution in the writing target layer 92 to which the multi-spot beam is emitted with the light quantity profile shown in FIG. 8(b). The horizontal axis in FIG. 8(c) represents the width direction and the vertical axis thereof represents the temperature of the modeling material 91 in the writing target layer 92. FIG. 8(d) is a view showing a pattern (i.e., writing pattern) which is actually written in the transverse cross section 814.

In FIG. 8(b), respective areas represented by reference sings 711a, 711b, and 711c are ON areas in each of which a spot/spots of the multi-spot beam is/are lit up. Further, respective areas represented by reference sings 712 and 713 are OFF areas in each of which a spot/spots of the multi-spot beam is/are extinguished. As indicated by a solid line in FIG. 8(c), in the ON areas 711a, 711b, and 711c, the temperature of the modeling material 91 in the writing target layer 92 is increased up to the modeling temperature (e.g., 220 °C) higher than the melting point (e.g., 185 °C) of the modeling material 91 by scanning the multi-spot beam.

As shown in FIG. 8(b), a light quantity distribution in the ON area 711a is a substantially rectangular distribution. Further, outside an end portion of the ON area 711a in the width direction, the light quantity does not abruptly become zero but gradually decreases with distance from the ON area 711a. In the following description, the light quantity occurring outside the end portion of the ON area 711a in the width direction due to the light at the light spot in the ON area 711a will be also referred as an "end-portion light quantity". The same applies to the ON areas 711b and 711c.

In the OFF area 713 corresponding to the non-writing area 817 having a relatively large size in the width direction, the light quantity at both end portions in the width direction slightly increases by the end-portion light quantities of the ON areas 711b and 711c adjacent to both sides thereof. Further, in the OFF area 713, thermal diffusion from the ON areas 711b and 711c also occurs. For this reason, as indicated by the solid line in FIG. 8(c), the temperature of the modeling material 91 in the OFF area 713 slightly increases to be higher than the preheating temperature (e.g., 173 °C).

On the other hand, in the OFF area 712 corresponding to the narrow non-writing area 816 having a small size in the width direction, as shown in FG. 8(b), since the end-portion light quantities of the ON areas 711a and 711b adjacent to both sides thereof are accumulated, the light quantity thereof becomes higher than that of the OFF area 713 corresponding to the non-writing area 817. Further, in the OFF area 712, heat diffused from the ON area 711a and that from the ON area 711b also overlap. Therefore, as indicated by the solid line in FIG. 8(c), the temperature of the modeling material 91 in the OFF area 712 becomes higher than that of the modeling material 91 in the OFF area 713.

After that, due to the thermal diffusion from the ON areas 711a, 711b, and 711c with the passage of time, as indicated by a two-dot chain line in FIG. 8(c), the temperature of the modeling material 91 in the ON areas 711a, 711b, and 711c decreases and the temperature of the modeling material 91 in the OFF areas 712 and 713 increases. The state indicated by the two-dot chain line in FIG. 8(c) is a state at a temperature at the time when about 0.3 to 0.5 seconds have elapsed after the emission of the multi-spot beam to the ON areas 711a, 711b, and 711c is ended. As a result, the temperature of the modeling material 91 in the OFF area 712 becomes higher than the melting point (e.g., 185 °C), and there arises a possibility that fusion of the modeling material 91 contrary to the intention may occur in the OFF area 712.

When fusion of the modeling material 91 occurs in the OFF area 712, as shown in FIG. 8(d), in the actual writing pattern, the narrow non-writing area 816 disappears or the width of the narrow non-writing area 816 becomes smaller than a design value thereof between the writing areas 815a and 815b. Further, since the temperature of the modeling material 91 in the OFF area 713 does not increase up to the melting point, no fusion of the modeling material 91 occurs in the OFF area 713. Therefore, the non-writing area 817 is present between the writing areas 815b and 815c.

Thus, in the writing in the first writing mode, in a case where the pattern includes the narrow non-writing area 816, there is a possibility to reduce the writing accuracy in the narrow non-writing area 816. The possibility to reduce the writing accuracy is the same even when the width of the non-writing area is small in the scan direction or even when that is small in the up-and-down direction.

Then, in the three-dimensional modeling apparatus 1, in a case where the pattern includes the narrow non-writing area 816, the pattern writing is performed in the second writing mode, instead of the first writing mode. As described above, in the first writing mode, the scanning of the multi-spot beam is performed only once at each position of the writing areas 815a to 815c. On the other hand, in the second writing mode, the scanning of the multi-spot beam is performed a plurality of times at each position of the writing areas 815a to 815c. In the second writing mode, the quantity of light applied to each position in the writing areas 815a to 815c in one scanning of the multi-spot beam is smaller than that applied to each position in the writing areas 815a to 815c in the first writing mode.

In the second writing mode, for example, in a state where the quantity of light applied to each position in the writing areas 815a to 815c in one scanning of the multi-spot beam (hereinafter, also referred to as "the light quantity per one scan") is about half that in the first writing mode, the scanning of the multi-spot beam at each position of the writing areas 815a to 815c is performed two times. Specifically, in the second writing mode, by setting the light intensity of the light beam to be emitted to the writing areas 815a to 815c to be the same as that in the first writing mode and setting the scanning speed of the multi-spot beam to be twice that in the first writing mode, the light quantity per one scan becomes about half that in the first writing mode.

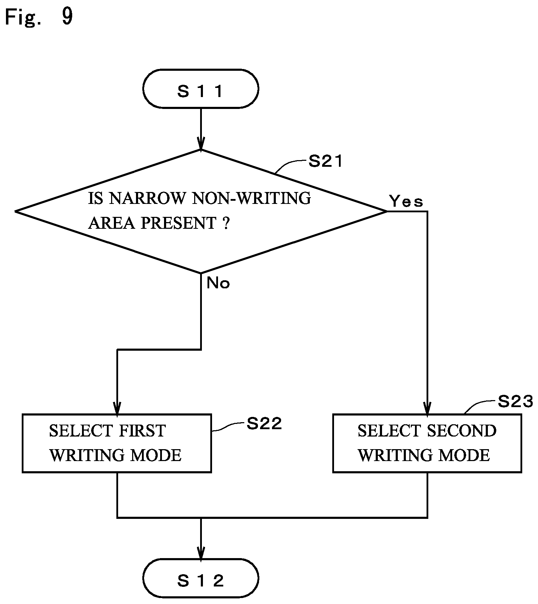

Hereinafter, the pattern writing in the first writing mode and the second writing mode in the three-dimensional modeling apparatus 1 will be described with reference to FIG. 9 and the like. In the three-dimensional modeling apparatus 1, it is checked by the mode switching part 504, whether or not the narrow non-writing area is present in the design data stored into the storage part 501 in Step S11 (see FIG. 4) (Step S21). Specifically, it is checked whether or not the non-writing area having a width not larger than the narrow threshold value (i.e., the narrow non-writing area) is present, by extracting each non-writing area from the design data and comparing the minimum width of the non-writing area each in the scan direction, in the width direction, and in the up-and-down direction with the above-described narrow threshold value. Further, the respective narrow threshold values in the scan direction, the width direction, and the up-and-down direction may be the same as one another or may be different from one another.

In a case where no narrow non-writing area is included in the design data, the mode switching part 504 selects the first writing mode as the writing mode (Step S22) and formation of the modeled object 81 is performed (FIG. 4: Steps S12 to S14). In Step S13 in the first writing mode, as described above, the scanning of the multi-spot beam having the first light intensity at each position in the writing area is performed only once at the first scanning speed.

On the other hand, in a case where a narrow non-writing area is included in the design data, the mode switching part 504 selects the second writing mode as the writing mode (Step S23) and formation of the modeled object 81 is performed (FIG. 4: Steps S12 to S14). In Step S13 in the second writing mode, as described above, the scanning of the multi-spot beam at each position in the writing area is performed two times. The light intensity (hereinafter, also referred to as a "second light intensity") of the multi-spot beam emitted to the modeling material 91 in the second writing mode is the same as the first light intensity. Further, the scanning speed (hereinafter, also referred to as a "second scanning speed") of the multi-spot beam in the second writing mode is twice the first scanning speed.

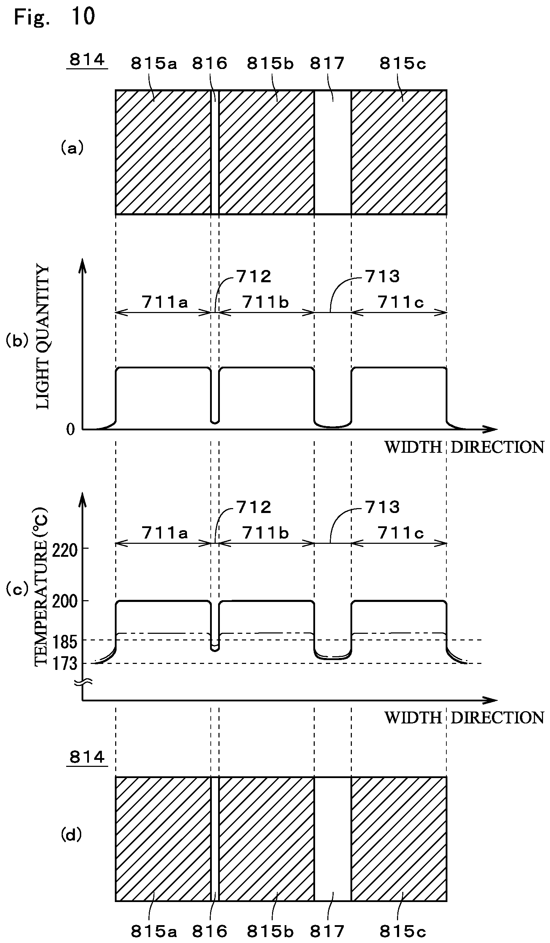

FIG. 10 is a view showing a light quantity profile and the like in writing a pattern corresponding to the transverse cross section 814 in the second writing mode. FIGs. 10(a) to 10(d) correspond to FIGs 8(a) to 8(d), respectively. FIG. 10(a) is a view showing a design pattern in the transverse cross section 814. FIG. 10(b) is a graph showing the light quantity profile of the multi-spot beam to be emitted onto the writing target layer 92 in the first scanning among the two scannings of the multi-spot beam in the second writing mode. Since the second light intensity is the same as the first light intensity and the second scanning speed is twice the first scanning speed as described above, the quantity of light applied to each position in the ON areas 711a, 711b, and 711c in FIG. 10(b) is about half the quantity of light applied to each position in the ON areas 711a, 711b, and 711c in FIG. 8(b).

FIG. 10(c) is a view showing a temperature distribution in the writing target layer 92 on which the multi-spot beam is scanned with the light quantity profile shown in FIG. 10(b). As indicated by a solid line in FIG. 10(c), in the ON areas 711a, 711b, and 711c, the temperature of the modeling material 91 in the writing target layer 92 is increased up to a modeling temperature (e.g., 200 °C) higher than the melting point (e.g., 185 °C) of the modeling material 91 by one scanning of the multi-spot beam. The modeling temperature (e.g., 200 °C) in the second writing mode is lower than the above-described modeling temperature (e.g., 220 °C) in the first writing mode.

In the OFF areas 712 and 713, substantially like in the case of the first writing mode, due to the influences of the end-portion light quantities of the adjacent ON areas 711a, 711b, and 711c and the thermal diffusion from the ON areas 711a, 711b, and 711c, the temperature of the modeling material 91 increases to be higher than the preheating temperature (e.g., 173 °C) as indicated by the solid line in FIG. 10(c). Further, in the OFF area 712 corresponding to the narrow non-writing area 816 having a small size in the width direction, the temperature of the modeling material 91 becomes higher than that of the modeling material 91 in the OFF area 713 corresponding to the non-writing area 817 having a relatively large size in the width direction.

After that, due to the thermal diffusion from the ON areas 711a, 711b, and 711c with the passage of time, as indicated by a two-dot chain line in FIG. 10(c), the temperature of the modeling material 91 in the ON areas 711a, 711b, and 711c decreases and the temperature of the modeling material 91 in the OFF areas 712 and 713 increases. The state indicated by the two-dot chain line in FIG. 10(c) is a state at a temperature at the time when about 0.3 to 0.5 seconds have elapsed after the emission of the multi-spot beam to the ON areas 711a, 711b, and 711c is ended.

In the second writing mode, as described above, the quantity of light applied to each position in the ON areas 711a, 711b, and 711c is about half the light quantity in the first writing mode, and the modeling temperature (e.g., 200 °C) of the ON areas 711a, 711b, and 711c is lower than the modeling temperature (e.g., 220 °C) in the first writing mode. For this reason, in the second writing mode, the amount of temperature rise of the modeling material 91 in the OFF areas 712 and 713 (i.e., the difference between the solid line and the two-dot chain line in FIG. 10(c)) also becomes smaller than that in the first writing mode. As a result, also in the OFF area 712 corresponding to the narrow non-writing area 816, the temperature of the modeling material 91 becomes lower than the melting point (e.g., 185 °C), and it is thereby possible to prevent fusion of the modeling material 91 contrary to the intention in the OFF area 712.

In the second writing mode, when the first scanning of the multi-spot beam over the entire writing target layer 92 of the modeling material 91 is ended, the second scanning of the multi-spot beam is performed. The time period from the start of the first scanning of the multi-spot beam until the end of the scanning is, for example, ten several seconds. Therefore, when the second scanning of the multi-spot beam starts, the temperature of the writing target layer 92 is lower than that shown in FIG. 10(c) as a whole and becomes a temperature close to the above-described preheating temperature (e.g., 173 °C). Further, also in the second scanning of the multi-spot beam, the second light intensity and the second scanning speed are the same as those in the first scanning. Therefore, the quantity of light applied to each position in the writing areas 815a to 815c in the second scanning is the same as the quantity of light (see FIG. 10(b)) applied to each position in the writing areas 815a to 815c in the first scanning. As a result, the temperature distribution in the writing target layer 92 after the second scanning of the multi-spot beam is substantially the same as that shown in FIG. 10(c).

For this reason, also in the second scanning, substantially like in the first scanning, both in the OFF area 712 corresponding to the narrow non-writing area 816 and the OFF area 713 corresponding to the non-writing area 817, the temperature of the modeling material 91 is lower than the melting point (e.g., 185 °C), and it is thereby possible to prevent fusion of the modeling material 91 contrary to the intention. Therefore, as shown in FIG. 10(d), the narrow non-writing area 816 is present between the writing area 815a and the writing area 815b, and the non-writing area 817 is present between the writing area 815b and the writing area 815c. In other words, in the second writing mode, it is possible to form the modeled object 81 with high accuracy.

In the second writing mode, the time required for the multi-spot beam to traverse once on the writing target layer 92 in the scan direction is about half that in the first writing mode, and the number of scans is twice that in the first writing mode. Further, an interval between the above-described one traverse (hereinafter, also referred to as "one pass-move") and the next one pass-move is very small. Therefore, the time required to perform the pattern writing on one writing target layer 92 in the second writing mode is substantially the same as that required to perform the pattern writing on one writing target layer 92 in the first writing mode.

In the second writing mode, it is confirmed from the experiment that the strength of the modeled object 81 which is formed is about the same as that in the first writing mode or becomes higher than that in the first writing mode. As described above, in the writing areas 815a to 815c of the writing target layer 92, the modeling material 91 to which the multi-spot beam is emitted is fused, to thereby increase the fluidity, and voids between particles of the modeling material 91 are filled with the fused modeling material 91. The fluidity of the modeling material 91, however, is high in a range not lower than a predetermined temperature (e.g., the melting point) but not so high in a range lower than the predetermined temperature even if the modeling material 91 is maintained in a fused state. Further, the temperature of the modeling material 91 which is fused by emitting the multi-spot beam decreases relatively quickly as described above. Therefore, removal of the above-described voids noticeably progresses during a very short time (e.g., 0.5 seconds to 1 second) after the emission of the multi-spot beam and does not progress much after that. In the second writing mode, since the time period while the removal of the voids noticeably progresses occurs two times in the pattern writing on the writing target layer 92, it is thought that the strength of the modeled object 81 becomes higher as compared with that in the first writing mode in which the time period occurs only once.

In the second writing mode, any control other than the above-described exemplary case may be performed. For example, though the second light intensity and the second scanning speed are the same and the quantity of light applied to each position in the writing areas 815a to 815c is also the same between in the first scanning of the multi-spot beam and in the second scanning thereof in the second writing mode in the above-described exemplary case, this is only one exemplary case.

In the first example of the above-described other control, it is controlled that the quantity of light applied to each position in the writing areas 815a to 815c in the first scanning should become larger than that applied to each position in the writing areas 815a to 815c in the second scanning. Specifically, for example, the second scanning speed in the first scanning is made the same as that in the second scanning and the second light intensity in the first scanning is made higher than that in the second scanning. The second light intensity in the first scanning is made to be, for example, 1.2 times the first light intensity in the first writing mode and the second light intensity in the second scanning is made to be, for example, 0.8 times the first light intensity. Further, the second scanning speed in the first and second scannings is about twice the first scanning speed in the first writing mode like in the above-described case.

In this case, the quantity of light applied to each position in the writing areas 815a to 815c in the first scanning in the second writing mode is about 0.6 times that applied to each position in the writing areas 815a to 815c in the first writing mode. Further, the quantity of light applied to each position in the writing areas 815a to 815c in the second scanning in the second writing mode is about 0.4 times that applied to each position in the writing areas 815a to 815c in the first writing mode. In the first example of this other control, the total quantity of light applied to each position in the writing areas 815a to 815c in the second writing mode (i.e., the total of the quantities of light applied in the two scannings) is substantially the same as the quantity of light applied to each position in the writing areas 815a to 815c in the first writing mode but may be different therefrom.

In the second writing mode, even when the quantity of light applied to each position in the writing areas 815a to 815c is different between in the first scanning and in the second scanning, it is possible to form the modeled object 81 with high accuracy substantially like in the case where the light quantity in the first scanning is the same as that in the second scanning. Further, as described above, by making the above-described light quantity in the second scanning smaller than that in the first scanning, the amount of temperature rise of the modeling material 91 in the second scanning of the multi-spot beam becomes smaller than that in the first scanning. Therefore, after the first scanning, even when the second scanning is performed in a state where the temperature fall of the writing target layer 92 is insufficient, it is possible to suitably suppress fusion of the modeling material 91 in the narrow non-writing area 816 in the second scanning.

In the second example of the above-described other control, it is controlled that the second scanning speed in the first and second scannings in the second writing mode should be the same as the first scanning speed in the first writing mode, and the second light intensity in the first and second scannings in the second writing mode should be about half the first light intensity in the first writing mode. In this case, with the light quantity profile which is substantially the same as that in the exemplary case shown in FIG. 10(b), the scanning of the multi-spot beam on the writing target layer 92 is performed two times. As a result, substantially like in the exemplary case shown in FIG. 10(d), also in the OFF area 712 corresponding to the narrow non-writing area 816, it is possible to prevent fusion of the modeling material 91 contrary to the intention.

In the second example of this other control, the scanning of the multi-spot beam at each position in the writing areas 815a to 815c is performed two times at the second scanning speed which is the same as the first scanning speed. Therefore, the total irradiation time of the light beam at each position in the writing areas 815a to 815c in the second writing mode (i.e., the total of the irradiation times of the light beam in the two scannings) is about twice the irradiation time of the light beam at each position in the writing areas 815a to 815c in the first writing mode. For this reason, in the second writing mode, the time period while the fluidity of the modeling material 91 is maintained high is longer than that in the first writing mode, and as a result, the strength of the modeled object 81 becomes higher than that in the first writing mode.

In the second example of this other control, the total quantity of light applied to each position in the writing areas 815a to 815c in the second writing mode (i.e., the total of the quantities of light applied in the two scannings) is substantially the same as the quantity of light applied to each position in the writing areas 815a to 815c in the first writing mode but may be different therefrom.

In the second writing mode exemplarily shown in FIG. 10, on the basis of the temperature distribution on the upper surface of the modeling material 91, which is measured by the temperature measurement part 4 (i.e., the temperature distribution of the writing target layer 92), the second light intensity and/or the second scanning speed of the multi-spot beam may be adjusted. For example, the above-described temperature distribution is measured before the first scanning in the second writing mode, and when the temperature of the modeling material 91 is higher than a predetermined temperature, the laser light source 21 and the like are controlled by the intensity control part 503 and the second light intensity in the first scanning is thereby adjusted to be slightly lower. In this case, instead of the adjustment of the second light intensity or additional to the adjustment of the second light intensity, there may be a case where the scanning part 23 and the like are controlled by the scanning control part 502 and the second scanning speed in the first scanning is thereby adjusted to be slightly higher. Further, when the temperature of the modeling material 91 is lower than the predetermined temperature, the second light intensity in the first scanning is adjusted to be slightly higher and/or the second scanning speed in the first scanning is adjusted to be slightly lower. The same applies to the second scanning in the second writing mode. Further, the same applies to the writing in the first writing mode. Moreover, the same applies to the first and second examples of the above-described other control.

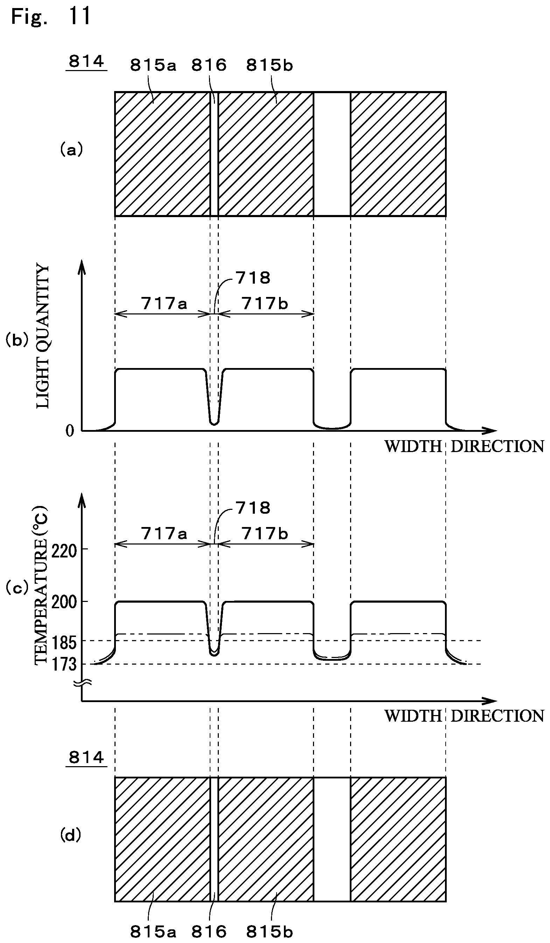

In the second writing mode, the shape of the OFF area 712 in the light quantity profile shown in FIG. 10(b) may be corrected to be that of the OFF area 718 shown in FIG. 11(b). In the exemplary case shown in FIG. 11(b), on both sides of an OFF area 718 corresponding to the narrow non-writing area 816 in the width direction, a boundary between ON areas 717a and 717b corresponding to the writing areas 815a and 815b and the OFF area 718 is tapered. Specifically, the light quantity at an end portion of the ON area 717a on a side of the OFF area 718 gradually decreases with the approach to the OFF area 718. Further, the light quantity at an end portion of the ON area 717b on a side of the OFF area 718 gradually decreases with the approach to the OFF area 718. The width of the OFF area 718 (i.e., the width of an area in which the light quantity does not largely vary in the vicinity of 0 in FIG. 11(b)) is substantially the same as that of the OFF area 712 shown in FIG. 10(b) (i.e., the width of the narrow non-writing area 816 in the design pattern). Furthermore, the width of the OFF area 718 may be larger or smaller than that of the OFF area 712.

It is thereby possible to suppress emission of the light beam on an area (hereinafter, also referred to as a "narrow-portion adjacent area") in the writing areas 815a and 815b, which is close to the narrow non-writing area 816. In other words, the quantity of light per unit area, which is applied to the narrow-portion adjacent area, is reduced to be smaller than the quantity of light per unit area, which is applied to an area in the writing areas 815a and 815b except the narrow-portion adjacent area. As a result, in the OFF area 718 corresponding to the narrow non-writing area 816, it is possible to suppress accumulation of the end-portion light quantity of the ON areas 717a and 717b adjacent thereto on both sides in the width direction. Further, in the OFF area 718, it is possible to suppress overlap of the heat diffused from the ON areas 717a and 717b.

For this reason, the temperature of the modeling material 91 in the OFF area 718 increases to be higher than the preheating temperature (e.g., 173 °C) to some degree as indicated by the solid line in FIG. 11(c) but does not increase up to the melting point (e.g., 185 °C) of the modeling material 91 as indicated by the two-dot chain line also after the thermal diffusion from the ON areas 717a and 717b occurs with the passage of time. Further, the temperature of the modeling material 91 in the OFF area 718 as indicated by the two-dot chain line in FIG. 11(c) becomes lower than the temperature of the modeling material 91 in the OFF area 712 as indicated by the two-dot chain line in FIG. 10(c). Therefore, it is possible to suitably prevent fusion of the modeling material 91 in the OFF area 718 contrary to the intention.

Correction of the light quantity profile shown in FIG. 11(b) is achieved, for example, by making the light intensity of the light spot corresponding to the narrow-portion adjacent area in the writing areas 815a and 815b among the plurality of light spots of the multi-spot beam to be lower than that of the light spot corresponding to an area in the writing areas 815a and 815b, other than the narrow-portion adjacent area.

In the three-dimensional modeling apparatus 1, the number of scans of the multi-spot beam at each position in the writing areas 815a to 815c in the second writing mode has only to be a plurality of times and is not limited to two. Even when the number of scans is three or more, substantially like in the above-described exemplary case where the number of scans is two, when the second light intensity in the second writing mode is the same as the first light intensity in the first writing mode, it is controlled that the second scanning speed in the second writing mode should become higher than the first scanning speed in the first writing mode. Further, when the second scanning speed in the second writing mode is the same as the first scanning speed in the first writing mode, it is controlled that the second light intensity in the second writing mode should become lower than the first light intensity in the first writing mode.

As described above, the three-dimensional modeling apparatus 1 includes the material holding part 3, the optical head 2, and the control part 5. The material holding part 3 has the stage 341 for holding a powdery modeling material 91 and the material supply part 32 for supplying the modeling material 91 onto the stage 341. The optical head 2 scans the light beam on the modeling material 91 held on the stage 341 while modulating the light beam. The control part 5 controls the material holding part 3 and the optical head 2 on the basis of the design data of the modeled object 81 to supply the modeling material 91 onto the stage 341 and scan the light beam on the writing target layer 92 which is a surface layer of the supplied modeling material 91, to thereby fuse the modeling material 91 in an area on which light is emitted and repeat writing of a pattern.

The control of the control part 5 is switchable between the first writing mode and the second writing mode. In the first writing mode, scanning of the light beam is performed only once at each position in the writing areas 815a to 815c on which writing is instructed by the design data on the writing target layer 92. In the second writing mode, scanning of the light beam is performed a plurality of times at each position in the writing areas 815a to 815c in a state where the quantity of light applied to each position in the writing areas 815a to 815c in one scanning of the light beam is smaller than that in the first writing mode.

In the three-dimensional modeling apparatus 1, as described above, by performing the pattern writing in the second writing mode, it is possible to suppress fusion of the modeling material 91 from occurring contrary to the intention in the non-writing areas 816 and 817 on which writing is not instructed by the design data. As a result, it is possible to form the modeled object 81 with high accuracy. Further, it is also possible to increase the strength of the modeled object 81. On the other hand, by performing the pattern writing in the first writing mode, it is possible to simplify the writing operation of the three-dimensional modeling apparatus 1.

In the three-dimensional modeling apparatus 1, as described above, when the non-writing areas 816 and 817 on which writing is not instructed by the design data include the narrow non-writing area 816 having a width not larger than a predetermined threshold value (i.e., the narrow threshold value), it is preferable that the second writing mode should be selected by the control part 5. When the design data include the narrow non-writing area 816, the second writing mode is thereby automatically selected, and it is possible to form the modeled object 81 with high accuracy.

As described above, it is preferable that the light intensity of the light beam in the second writing mode (i.e., the second light intensity) should be the same as the light intensity of the light beam in the first writing mode (i.e., the first light intensity) and the scanning speed of the light beam in the second writing mode (i.e., the second scanning speed) should be higher than the scanning speed of the light beam in the first writing mode (i.e., the first scanning speed). The time required to perform the pattern writing on one writing target layer 92 (hereinafter, also referred to as a "layer writing time") in the second writing mode can be thereby substantially the same as the layer writing time in the first writing mode while the modeled object 81 is formed with high accuracy. Further, even in a case where the layer writing time in the second writing mode increases to be longer than that in the first writing mode, it is possible to suppress the amount of increase. In other words, it is possible to form the modeled object 81 quickly with high accuracy in the second writing mode.

More preferably, the number of scans of the light beam at each position in the writing areas 815a to 815c in the second writing mode is two, and the scanning speed of the light beam in the second writing mode (i.e., the second scanning speed) is twice the scanning speed of the light beam in the first writing mode (i.e., the first scanning speed). It is thereby possible to easily achieve the second writing mode with a practical apparatus configuration without requiring an excessive performance of the scanning part 23 and the like.

As described above, it is also preferable that the scanning speed of the light beam in the second writing mode (i.e., the second scanning speed) should be the same as the scanning speed of the light beam in the first writing mode (i.e., the first scanning speed) and the light intensity of the light beam in the second writing mode (i.e., the second light intensity) should be lower than the light intensity of the light beam in the first writing mode (i.e., the first light intensity). It is thereby possible to further increase the strength of the modeled object 81 while forming the modeled object 81 with high accuracy in the second writing mode.

As described above, it is preferable that the number of scans of the light beam at each position in the writing areas 815a to 815c in the second writing mode should be two times and the quantity of light applied to each position in the writing areas 815a to 815c in the first scanning of the light beam in the second writing mode should be the same as that applied to each position in the writing areas 815a to 815c in the second scanning of the light beam in the second writing mode. It is thereby possible to increase the coidentity in a temperature change or the like of the modeling material 91 in the first and second scannings of the light beam in the second writing mode. Further, in the first and second scannings of the light beam in the second writing mode, by adopting the same second light intensity and the same second scanning speed, it is possible to simplify the control of the optical head 2 in the second writing mode.

As described above, the number of scans of the light beam at each position in the writing areas 815a to 815c in the second writing mode is two times, and it is preferable that the quantity of light applied to each position in the writing areas 815a to 815c in the first scanning of the light beam in the second writing mode should be larger than that applied to each position in the writing areas 815a to 815c in the second scanning of the light beam in the second writing mode. Thereby, the quantity of light applied in the second scanning to the narrow non-writing area 816, whose temperature is increased by the first scanning, is reduced as compared with that in the first scanning. As a result, it is thereby possible to further suppress the fusion of the modeling material contrary to the intention in the narrow non-writing area 816.

As described above, the light beam is a multi-spot beam consisting of a plurality of light spots which are linearly arranged in a predetermined arrangement direction, and it is preferable that the multi-spot beam should be scanned in a predetermined scan direction inclined with respect to the arrangement direction. It is thereby possible to reduce the time required to write a pattern on the writing target layer 92. Further, in the three-dimensional modeling apparatus 1, as described above, even when the design data include a narrow non-writing area, it is possible to form the modeled object 81 with high accuracy. Therefore, the three-dimensional modeling apparatus 1 is especially suitable for the writing with the multi-spot line beam, in which there is a possibility that the light beams may be emitted to the writing areas on both sides of the narrow non-writing area at the same time.

As described above, it is preferable that the three-dimensional modeling apparatus 1 should further include the temperature measurement part 4 for measuring the temperature distribution on the upper surface of the modeling material 91 on the stage 341. Further, it is preferable that the control part 5 should adjust the light intensity or the scanning speed (i.e., the second light intensity or the second scanning speed) of the light beam in the second writing mode on the basis of the temperature distribution measured by the temperature measurement part 4. It is thereby possible to form the modeled object 81 with high accuracy as described above.

As described above, it is preferable that the modeling material 91 should be a resin material. In the three-dimensional modeling apparatus 1, as described above, even when the heat of the writing area is not dissipated soon and the temperature of the non-writing area relatively easily increases, it is possible to form the modeling material 91 with high accuracy. Therefore, the three-dimensional modeling apparatus 1 is especially suitable for the three-dimensional modeling using a resin material having heat dissipation lower than that of a metal material.

In the above-described three-dimensional modeling apparatus 1, various modifications can be made.

For example, the adjustment of the second light intensity and the second scanning speed on the basis of the temperature distribution on the writing target layer 92, which is measured by the temperature measurement part 4, does not necessarily need to be performed. In this case, the temperature measurement part 4 may be omitted.

In the scanning of the multi-spot beam each time in the second writing mode, both the second light intensity and the second scanning speed may be changed from the first light intensity and the first scanning speed in the first writing mode, respectively. Further, in the second writing mode, among the plurality of scannings of the multi-spot beam, both the second light intensity and the second scanning speed in one scanning may be different from the second light intensity and the second scanning speed in any other scanning, respectively.

Switching between the first writing mode and the second writing mode does not necessarily need to be automatically performed by the control part 5, but the first writing mode or the second writing mode may be selected by the operator performing a predetermined input through the input part 56 or the like.

The configurations in the above-described preferred embodiment and variations may be combined as appropriate only if those do not conflict with one another.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 1: Three-dimensional modeling apparatus
- 2: Optical head
- 3: Material holding part
- 4: Temperature measurement part
- 5: Control part
- 32: Material supply part
- 81: Modeled object
- 91: Modeling material
- 92: Writing target layer
- 341: Stage
- 815, 815a, 815b, 815c: Writing area
- 816: (Narrow) non-writing area
- 817: Non-writing area

## Claims

1. A three-dimensional modeling apparatus, comprising:
a material holding part having a stage for holding a powdery modeling material and a material supply part for supplying said modeling material onto said stage;
an optical head for scanning a light beam on said modeling material held on said stage while modulating said light beam; and
a control part for controlling said material holding part and said optical head on the basis of design data of a modeled object to supply said modeling material onto said stage and scan said light beam on a writing target layer which is a surface layer of said supplied modeling material, to thereby fuse said modeling material in an area on which light is emitted and repeat writing of a pattern,
wherein a control by said control part is switchable between:
a first writing mode in which scanning of said light beam is performed only once at each position in a writing area on which writing is instructed by said design data on said writing target layer; and
a second writing mode in which scanning of said light beam is performed a plurality of times at each position in said writing area in a state where a quantity of light applied to each position in said writing area in one scanning of said light beam is smaller than that in said first writing mode.

2. The three-dimensional modeling apparatus according to claim 1, wherein
said second writing mode is selected by said control part in a case where a non-writing area on which writing is not instructed by said design data includes a narrow non-writing area having a width not larger than a predetermined threshold value.

3. The three-dimensional modeling apparatus according to claim 1 or 2, wherein
a light intensity of said light beam in said second writing mode is the same as that of said light beam in said first writing mode, and
a scanning speed of said light beam in said second writing mode is higher than that of said light beam in said first writing mode.

4. The three-dimensional modeling apparatus according to claim 3, wherein
a number of scans of said light beam at each position in said writing area in said second writing mode is two times, and
the scanning speed of said light beam in said second writing mode is twice the scanning speed of said light beam in said first writing mode.

5. The three-dimensional modeling apparatus according to claim 1 or 2, wherein
a scanning speed of said light beam in said second writing mode is the same as that of said light beam in said first writing mode, and
a light intensity of said light beam in said second writing mode is lower than that of said light beam in said first writing mode.

6. The three-dimensional modeling apparatus according to claim 1 or 2, wherein
a number of scans of said light beam at each position in said writing area in said second writing mode is two times, and
the quantity of light applied to each position in said writing area in a first scanning of said light beam in said second writing mode is the same as that applied to each position in said writing area in a second scanning of said light beam in said second writing mode.

7. The three-dimensional modeling apparatus according to claim 1 or 2, wherein
a number of scans of said light beam at each position in said writing area in said second writing mode is two times, and
the quantity of light applied to each position in said writing area in a first scanning of said light beam in said second writing mode is larger than that applied to each position in said writing area in a second scanning of said light beam in said second writing mode.

8. The three-dimensional modeling apparatus according to claim 1 or 2, wherein
said light beam is a multi-spot beam consisting of a plurality of light spots which are linearly arranged in a predetermined arrangement direction, and
said multi-spot beam is scanned in a predetermined scan direction inclined with respect to said arrangement direction.

9. The three-dimensional modeling apparatus according to claim 1 or 2, further comprising:
a temperature measurement part for measuring a temperature distribution on an upper surface of said modeling material on said stage,
wherein said control part adjusts a light intensity or a scanning speed of said light beam in said second writing mode on the basis of said temperature distribution measured by said temperature measurement part.

10. The three-dimensional modeling apparatus according to claim 1 or 2, wherein
said modeling material is a resin material.
